# EUROPEAN PATENT APPLICATION

(11) **EP 2 218 601 A1**
(43) Date of publication of application: **18.08.2010**
(21) Application number: 07823018.2
(22) Date of filing: 26.10.2007
(51) Int. Cl.: B60J 5/06, E05F 15/14

(54) **SYSTEM INTENDED TO ENABLE THE TRANSLATION MOVEMENT OF SLIDING DOORS AND TO ACTUATE THE BLOCKING OF SAME**

(71) Applicant: Train Automatic Solutions In & Out (Tasio), C/Ruiz de Alarcón 13-3° 28014 Madrid (ES)
(72) Inventor: LOPEZ SAEZ, Alberto, E-28320 Pinto (Madrid) (ES); CORTIZO RODRIGUEZ, Jose, Luis, E-28320 Pinto (Madrid) (ES)
(74) Representative: Carpintero Lopez, Francisco
(86) International application number: PCT/ES2007/000612
(87) International publication number: WO 2009/053501

(57) **Abstract**

The invention relates to a system for the translation and locking operation of sliding doors, which allows operating locking means (14) in a sequential and synchronized manner for the purpose of their translation movement, comprising a sliding door (1) operated by a drive pulley (12) actuated by means of a power source (2) which is operatively connected to an input shaft (5) of an epicyclic gear train (4) comprising a planet carrier (10) configured to activate the locking means (14) of the door (1) when it is in a closed position, which allows preventing the activation of said locking means (14) when the door (1) is not in the closed position.

## Description

### Object of the Invention

The present invention relates to a system for the translation and locking operation of sliding doors, which allows sequentially and automatically operating locking means of said doors after the translation movement for closing them has ended, as well as deactivating said locking means prior to beginning the translation movement for opening them, without the possibility of changing the sequence of actions.

The invention allows dispensing with external reducers located in series with a power source, such as for example at the output of an electric motor, allowing the implementation thereof in any type of sliding door, including automatically operated doors of rail vehicles.

### Background of the Invention

Today it is common practice to use automatically operated sliding doors in public transport vehicles, such as for example in the area of rail transport.

Sliding doors are especially suitable for use in passenger rail vehicles, and particularly in those vehicles having a high frequency of short stops for reasons of space economy and stop time on the platform, given that this type of door occupies minimum space in the open position, being kept in an arrangement parallel to the walls of the car which allow preventing obstructing access to the cars.

On the other hand, sliding doors allow minimizing the stop time of the rail vehicle on the platform, given that their operation is performed quickly.

This type of door usually consists of two leaves which are displaced parallel to and outside the body of the vehicle, fitting into the opening of the door when they are in the closed position.

To operate the leaves, they are linked to supports displaced on a guide and operated by a belt, which is in turn actuated by a motor.

In these doors, the belt has two shoes fixed thereto in opposite sections, each of which is articulated to a vertex of an L-shaped angular connecting rod. Likewise, each angular connecting rod is articulated by the free end of its longest branch to the corresponding support. On the other hand, the other end of each angular connecting rod has a lug for its displacement on an auxiliary guide.

Said auxiliary guides have an inflection at their inner end allowing the connecting rods to keep their longest branch with an orientation perpendicular to the doors during most of their travel, in which the doors are maintained parallel to the body of the vehicle, allowing an inward swinging movement, causing said doors to fit when they reach the oblique section of the auxiliary guides.

The doors of a rail vehicle are mainly subjected to two types of stresses. On one hand, they are subjected to vertical actions, the main component of which is due to the actual weight of the door, and on the other hand they are subjected to horizontal actions as a result of passengers resting against them and to a larger extent due to the aerodynamic load produced especially when the train is in transit, for example in situations of trains passing one another or passing through tunnels at high speeds. Said aerodynamic load is even more relevant in the area of high speed trains, in which case it must be carefully considered.

For doors to withstand said stresses, systems today comprise locking means to keep the door closed once the movement for closing it has ended.

The main drawback of these doors is that all the loads the door is subjected to, both the vertical actions and the horizontal actions, are withstood by frames located in the upper part, in correspondence with the drive pulley for operating the movement of the doors, which are not enough to withstand the actions occurring in certain, sporadic situations, such as for example when trains pass each other at high speeds.

For the purpose of palliating the drawback discussed in the preceding paragraph, the elements comprised in the door must be oversized today, which makes them more expensive and increases their weight in an inefficient manner.

On the other hand, this type of door does not have mechanical means which allow assuring that the door is locked sequentially and automatically after it is closed, once the door is locked in its closed position, therefore in a situation of aerodynamic impact, the locking means may malfunction, with the subsequent risk of the door opening and causing an accident.

### Description of the Invention

The present invention relates to a system for the translation and locking operation of sliding doors comprising a epicyclic gear train configured to automatically operate a locking means or system for doors, which allows maintaining and assuring said locking mechanically, thus preventing the risk of malfunction both when the doors are closing and locking, and when they are opening.

The doors can be configured to combine a transverse movement for pushing them out prior to opening them and locking them in a closed position, said doors being known as push-out sliding doors, the possibility of being in rail vehicles as well as in any public transport vehicle, such as buses or ships, being contemplated, even being able to be doors used in the area of construction, for example in building accesses, or sliding doors which do not swivel, i.e., in which there is not a movement prior to being pushed out.

The system for the translation and locking operation of sliding doors of the invention comprises at least one door configured to perform a sliding movement operated by operating means.

Operating means are understood as the means necessary for pushing the door out, specifically a leaf of a door, when it is locked in the closed position, to then move said door, parallel to the actual plane of the door, for the purpose of reaching an open position in which the opening of the door is open and completely accessible.

The operating means are likewise configured to move said door from the open position to the closed position, in which the door is locked, again being in a positioning prior to being pushed out.

Actually, the movement of pushing the door out is the beginning of the opening thereof, to which end the possibility of the door being pushed out according to different outward movements or paths of the leaf, according to different angles between a push-out path perpendicular to the plane of the door and a path parallel to the plane of the door is contemplated, said options for the locking or inward movement of the leaf of the door to reach the closed position also being contemplated.

The possibility of the operating means of the system of the invention comprising any guide means or type configured so that the door performs a guided translation movement parallel to the actual plane of the door during most of its travel for opening and closing is likewise contemplated, being able to comprise to that end triangular connecting rods, carriages, roller guides, steel tracks or any other type of guide.

According to an analysis of different paths of the inward and outward movement of the leaf, it can be concluded that angles closest to the perpendicular favor the tightness of the leaf in its closed position, this being the optimal path for pushing the leaf out in an emergency situation, however the work of wedge locking is unfavorable.

On the other hand, acute angles favor the work of wedge locking, however in the case of rail vehicles the leaf can touch the body on the sides, in addition to damaging the work of the rubber seals of the door and negatively affect pushing the leaf out in the case in case of emergency.

Therefore, considering the aspects discussed above, it is experimentally concluded that the optimal solution is a path forming a 70º angle with the body, which has the advantages of pushing out perpendicularly, favors the work of wedge locking, and allows more horizontal guides, i.e., with less inclination, resulting in less stress.

In rail vehicles, said angle of outward movement of 70º is the critical angle to not touch the fairing of the train. It is the optimal angle from the point of view of tightness, pushing and unlocking in the case of manual opening in emergency situations, while at the same time having a smooth inward movement.

According to the invention, the operating means comprise at least one drive or traction pulley actuated by means of at least one power source, which is operatively connected to an input shaft of an epicyclic gear train.

The epicyclic gear train comprises a planet carrier and is configured to sequentially activate locking means of the door when it is in a closed position, being in a locked position in which the drive pulley does not act.

The epicyclic gear train is also configured to prevent an activation of said locking means when the door is not in the closed position.

The epicyclic gear train thus has a dual function which is automatically performed sequentially and synchronously, increasing the safety of the closed position of the door; it first allows acting on the operating means to cause the door to close from an open position and then allows activating or operating the locking means. In summary, the system of the invention is sequential; first the door is closed and then it is locked.

The epicyclic gear train is a gear train comprising at least one planetary gear, also referred to as outside gear, rotating about a sun gear, or central gear. The planetary gears are assembled on a mobile arm referred to as planet carrier which in turn can rotate with respect to the sun gear.

The power source, which can be an electric motor, acts as a control for opening and closing the operating means for the doors, such that when it has finished acting on said operating means it acts as an operating control for the locking means. By mechanically assuring this sequential synchronization in the movements, actuation of the locking means is prevented in the event that the leaves of the doors are not in the closed position.

The possibility of the power source consisting of any drive means, such as for example an electric motor or control, a pneumatic motor or any other type of means for generating or producing power, including manual operation, is contemplated; therefore the system of the invention is extremely versatile as it allows its operation with different power sources.

It is also contemplated that the input shaft of the epicyclic gear train is operatively in solidarity with a sun gear which meshes with at least one input planetary gear, preferably with three input planetary gears, which is operatively connected with at least one output planetary gear, preferably three, according to a gear reduction ratio.

The output planetary gear in turn meshes with an output shaft configured to transmit its rotating movement to the operating means and the drive pulley, whereas the input planetary gear is operatively in solidarity with the output planetary gear by means of the planet carrier, for example by means of common shafts which allow the rotation of said planetary gears.

By means of said gear reduction ratio, since the input planetary gears have a diameter greater than the output planetary gears, their rotation is prevented when the door is in the locked position. In the event that the system does not have said reduction ratio, i.e., in the event that the input and output planetary gears have the same diameter, the rotation would be allowed, thereby existing the possibility that the arm of the epicyclic gear train could move.

The possibility of the planet carrier comprising an arm which is configured to act on transmission means when the input shaft is moving and the output shaft is locked is contemplated, said transmission means being configured to activate the locking means of the door.

The epicyclic gear train is configured to perform an operating function of the locking means by means of the transmission means. During the translation movement of the door, both for opening it and closing it, the planet carrier and its arm remain immobile, fixed or locked, whereby the movement of the power source is transmitted directly from the input sun gear to the drive pulley, with a suitable gear reduction ratio, usually between three or four to one.

According to a preferred embodiment in which the doors are the doors of a rail vehicle, while said leaves of the door are moving with respect to the body of the vehicle, the arm of the epicyclic gear train is locked and the movement of the power source is transmitted directly to the drive pulley, which is configured to move the leaves of the door. This transmission is performed through the movement of the central sun gears.

Next, when the door is in its closed position, the drive pulley reaches its end of travel position, at which time the power source continues to act, whereby since the output shaft is locked, the epicyclic gear train acts by transmitting the movement from the power source to the planet carrier and to its arm which starts to move, causing the operation of the transmission means, which in turn transmit said operation to the locking means. The locking of the door is thus coordinated with its translation movements, the locking means being activated once the door is closed.

The epicyclic gear train thus allows operating the translation movements for opening and closing the doors and, in a synchronized and sequential manner, operating the locking means.

The epicyclic gear train also allows reducing the speed at the output of the power source, without the need for an external reducer between said power source and the drive pulley. The epicyclic gear train actually allows dispensing and/or collaborating with an external reducer.

To unlock the doors, prior to the beginning of the movement for opening the doors, with the locking means activated, in addition to normally being secured by a motor brake and the actual operation of the epicyclic gear train, the power source begins its movement to cause the doors to open, but since the leaves of the door are locked, the power source causes the rotation of the arm of the epicyclic gear train, which begins to rotate in the direction opposite to that of the activation for locking the doors, whereby deactivating said locking, thus releasing the locking means.

The movement is limited by means of a stop outside the arm of the epicyclic gear train so that it travels only what is necessary to allow the deactivation of the locking means. When the arm reaches said stop all the movement of the power source is transmitted to the drive pulley, which causes the translation movement for opening the leaves of the door.

It is contemplated that the locking means are located in a side area of the door and comprise at least one retaining bolt in solidarity with the door, said retaining bolt being configured to be housed in a cam groove having a retaining part which is in solidarity with respect to an opening of the door, i.e., it is not displaced with said door, which is locked in a locked position after closing.

The locking means comprise at least one locking lug configured to be actuated by means of the transmission means and lock the retaining part in the locked position in which the retaining part houses said retaining bolt.

When the door has ended its travel for closing the door parallel to its own plane and is beginning its final phase for the inward movement in the closed position, in combination with a component transverse to the plane of door, the cam groove of the retaining part is thus housed or self-locked in the retaining bolt of the door, being locked in the closed position by means of the action of the locking lug, which is operated or actuated by the movement made by the arm of the epicyclic gear train through the transmission means.

In the particular embodiment in which the door is in a rail vehicle, the locking means remain in solidarity, i.e., there is no relative movement, with respect to the body of the vehicle, and therefore with respect to the opening of the door, at all times.

Given that the doors do not withstand horizontal loads caused, for example, in situations of trains passing one another, but rather they only withstand the actual vertical load of the door, the locking means are the elements withstanding said horizontal load or thrust, which allows optimally using each part of the door depending on said distribution of components, while at the same time the safety is increased and the risk of malfunction is minimized.

In the systems used today, all the components of the loads to which the door was subjected, for example while the trains are in transit, were withstood by the actual door and transmitted to the opening/closing mechanism, with the subsequent risk of malfunction that this entails due to load peaks, especially due to the horizontal thrusts occurring when two trains pass one another.

The locking means can thus withstand very high loads due to horizontal actions when trains pass one another, which loads can range from 4000 Pa to 9000 Pa.

Therefore, the locking means or system is independent in relation to the distribution of loads, withstanding the horizontal loads, although it shares its operation with the translation means, i.e. with the system causing the movements for opening and closing, which withstands the vertical loads, which allows optimizing the locking process and better withstanding horizontal forces.

The shape and orientation of the cam groove can be horizontal or vertical, complying in any case with its function of housing and retaining the retaining bolt, which is determined by the actual features of the design of the remaining components outside the door, for example according to the situation of the mechanisms for cleaning a rail vehicle.

The possibility of the locking means comprising at least one automatic locking mechanism of the automatic locking/closing mechanism type acting on the latch of the closing mechanism of a conventional door is contemplated.

Said automatic locking mechanism comprises elastic means, such as for example springs, which are configured to permanently act on the locking lug, such that it permanently acts on the retaining part, i.e., said locking lug, and therefore the locking means are permanently loaded to lock the door.

With respect to the transmission means, it is contemplated that they comprise push-pull operating cables and/or rods, which allows mechanical activation.

For their use in the invention, said push-pull cables and/or rods do not require being displaced more than approximately 30 mm, such that a rotation of the arm of an 8-10º angle allows reaching any point of the door. Preferably two or three cables are arranged per door, for which the torque supplied by a small motor of about 100 W power is sufficient, without having to function at full power.

It is also contemplated that the invention comprises an emergency system sharing one and the same push-pull cable centralizer for the emergency pull handle and for the cables of the transmission means of the system, as well as the placement of two cables in parallel for redundancy.

The emergency system allows releasing the motor brake, such that the emergency cable does not act on the locking operations performed during the service of the system, i.e. in non-emergency situations. To release or unlock the emergency cable, a force not greater than 15 kg is required, which force is determined by safety regulations, for the purpose of allowing the release of the door without a motor brake, i.e., to allow easily opening the door in case of emergency.

The possibility of the transmission means comprising at least one pneumatic electrovalve, at least one hydraulic pump, like the brake means used in motorcycles, as well as at least one electromagnet, is also contemplated.

According to a preferred embodiment, the power source and the epicyclic gear train are supported by means of an adjustable support frame which is located on the opening of the door, said support frame being able to consist of an upper support structure, comprising a standard central part and two customized side sections according to the width and size of the door, thus being adjustable and requiring less stock, allowing greater versatility and easier assembly of the system, especially for its implementation in different rail vehicles.

The possibility of the door being linked to a vertical rotation axis in solidarity with the opening by means of at least one dislocatable link which, at a first end is fixed to said vertical rotation axis and at a second end is articulated to a vertex of a triangular part by means of a roller guide is contemplated, said triangular part comprising a roller guide in each vertex, and two roller guides being housed, with displacement possibility, in a guide located in an inner face of the door, according to its translation direction.

Said dislocatable link is a simple mechanism which allows maintaining at all times the parallelism of the leaf of the door, being adapted to any path for the inward movement of the leaf of the door, including different angles and distances for pushing it out.

The wheels are optimally adjusted to the guide, without allowances, by means of this mechanism. By means of modifying the length of the links, it is possible to adapt to different lengths for pushing the leaf out. The mechanism allows placing at least three wheels without transmitting any torque to the guide.

The system comprises bars which, by means of the connecting rods, must move on guides along the leaf of the door. Additionally, the requirement of parallelism in turn transmits the mechanical actions between the existing guides. The horizontal actions on the door are transferred to the dislocatable links which assure that the locking effect is transferred to the entire leaf of the door, transmitting part of the locking forces to the entire leaf.

Usually the distance of the outward movement or for pushing out the door is between 40-80 mm, although the mechanism can reach greater distances, said distance for pushing out the door being determined by the triangles and the curved guides.

The angle for the outward movement of the door is determined on one hand by the geometry of the triangular part, having three vertexes, one being articulated to the door by means of a joint, another one to the curved guide and the third one to the displaceable guide, and on the other hand the geometry of the curved guide, to define the inward movement and the movement for pushing the door out. With a standard roller guide it is necessary to have a link for each type of pushing out movement, i.e., for each curved guide geometry, whereas the dislocatable link allows using the same geometry for any type of pushing out movement. With the dislocatable link the door automatically maintains parallelism of the lower part and the upper part.

The possibility of the dislocatable link having a non-planar, bent or split shape with a step according to its profile is also contemplated in order to be adapted to the fairing of the train, equally carrying out its function. Therefore, the system is adaptable to different types of fairing according to the different car manufacturers, which allows reducing the weight of the systems currently used by about 50%.

It is contemplated that the system for the translation and locking operation of sliding doors proposed by the invention comprises at least one pin configured to allow a movement of the arm of the planet carrier when said at least one door is in a closed position.

The operation or movement of the epicyclic gear train is limited by said pin, which can incorporate a groove configured to coincide with the arm and allow its operating movement when said pin is displaced as a result of the door closing, thus being a dual safety means, though it is not an indispensable element, given that the arm does not move until it is operated when the door is in the closed position and the drive pulley reaches its end of travel position, such that the output shaft is locked, the arm of the epicyclic gear train acting at said time. As a dual safety measure, and in a synchronized manner, at the same time the door is located in its closed position, it acts on a pin which allows the movement of the arm by means of its groove.

Said pin thus prevents the actuation of the arm, and therefore the operation of the locking means, in the event that the door is not closed, and as a result of a failed locking or a jam, the output shaft is locked, which would lead to the movement of said arm, even if the door is not closed, said situation being prevented by means of the arrangement of said pin.

To actuate the system, incorporating said pin, as the arm is released and the drive pulley is stopped since the leaves of the door have reached their end of travel position, the arm of the epicyclic gear train begins to rotate about the input and output shafts since the power source continues with the movement to close them. Said movement is thus used to operate the corresponding control.

The possibility of the system of the invention comprising a ratchet mechanism, in solidarity with the output shaft and located in parallel to the drive pulley is also contemplated, said ratchet mechanism being configured to prevent the rotation of the output shaft until it is mechanically actuated by the arm of the planet carrier when said arm has deactivated the locking means.

When the power source receives the order to open the doors, it sends the power to the epicyclic gear train and to the pulley. Since the pulley is locked by the catch, the epicyclic gear train can only operate the release of the locking. Once the aforementioned is performed, the ratchet mechanism is released by means of a pin, the epicyclic gear train is locked for the previously mentioned operation and the door is pushed out and translated.

Mechanical locking of the shaft of the motor, or input shaft, in the closed position is thus achieved in a location outside the drive pulley.

An abrupt popping occurring when the locking is released and undesired actions are prevented by means of said ratchet mechanism.

When the doors are closed and have been secured with the latch, the epicyclic gear train operates the locking mechanism. Additionally and parallel to the shaft of the pulley there is a ratchet mechanism which, when the pin has been released by the operation of the doors, in turn locks the opening mechanism. When the power source receives the order to open the doors, it sends the power to the epicyclic gear train and to the pulley. Since the pulley is locked by the catch, the epicyclic gear train can only operate the locking release mechanism. Once the foregoing has been carried out, the ratchet mechanism is released by means of a pin, the epicyclic gear train is locked for the previously mentioned operation and the door is pushed out and translated.

On the other hand, the possibility of the system for the translation and locking operation of sliding doors according to a preferred embodiment being located in a vehicle and comprising at least one closed door sensor and at least one locked door sensor configured to prevent said vehicle from starting up in the event that said sensors detect that the door is not closed or locked is contemplated. These sensors are sequential, therefore in the event that any of them should fail a control prevents the vehicle from starting up on its way.

It is also contemplated that the epicyclic gear train comprises a protection configured to prevent said epicyclic gear train from becoming dirty.

Said protection can consist of a high-strength plastic bag comprising quick closing means and contains substances protecting against dirt.

Rather than arranging a protective casing, a plastic bag that is resistant at high temperatures, such as for example up to 120º, with Velcro, clamp or zip closure, after the placement of a netting, to protect against dirt, is arranged. A bushing can be arranged in the shaft areas and it can be regularly replaced.

It is contemplated that the epicyclic gear train comprises friction bearings, which is inexpensive, as well as bearings.

The elements projecting outside the system are preferably made of stainless steel and the remaining components are zinc or powder coated.

Finally the possibility of the power source consisting of a motor with the epicyclic gear train incorporated is contemplated.

### Description of the Drawings

To complement the description being made and for the purpose of aiding to better understand the features of the invention according to a preferred practical embodiment thereof, a set of drawings is attached as an integral part of said description in which the following has been depicted with an illustrative and non-limiting character:

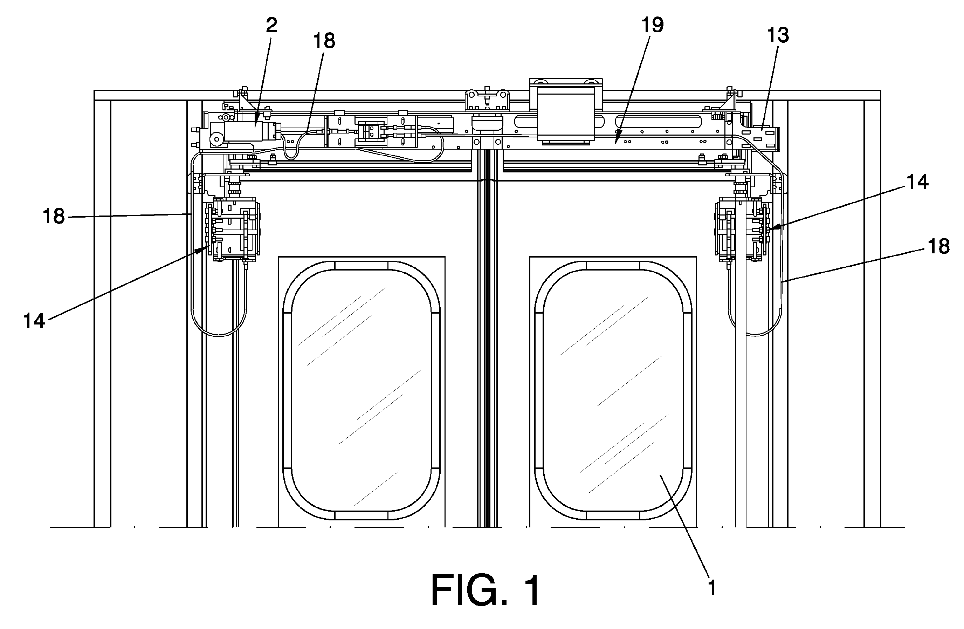

Figure 1 shows a schematic elevational view of a preferred embodiment of the system for the translation and locking operation of sliding doors proposed by the invention, in which the system is in a double-leaf sliding door of a rail vehicle.

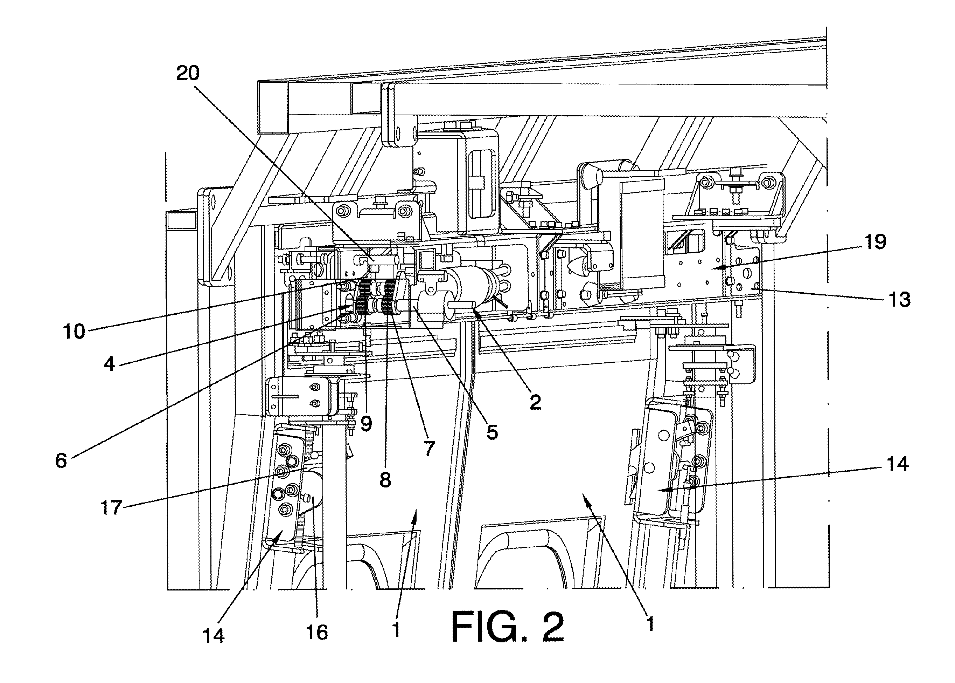

Figure 2 shows a perspective view of the upper part of the embodiment depicted in the previous figure.

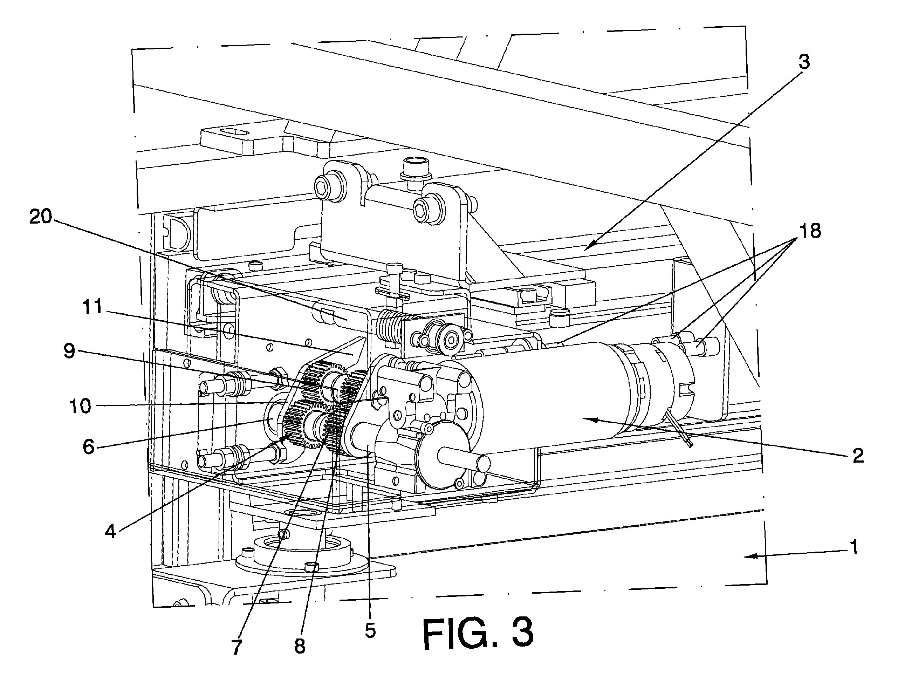

Figure 3 shows a detail, according to an upper perspective view, of the epicyclic gear train comprised in the system of the invention.
Figure 4 shows a partial section of an elevational view of the embodiment shown in the previous figures, in which the electric motor and the epicyclic gear train can be seen, in which the arm of the planet carrier is configured to act on a push-pull operating cable when it is released by the pin for closing the doors.

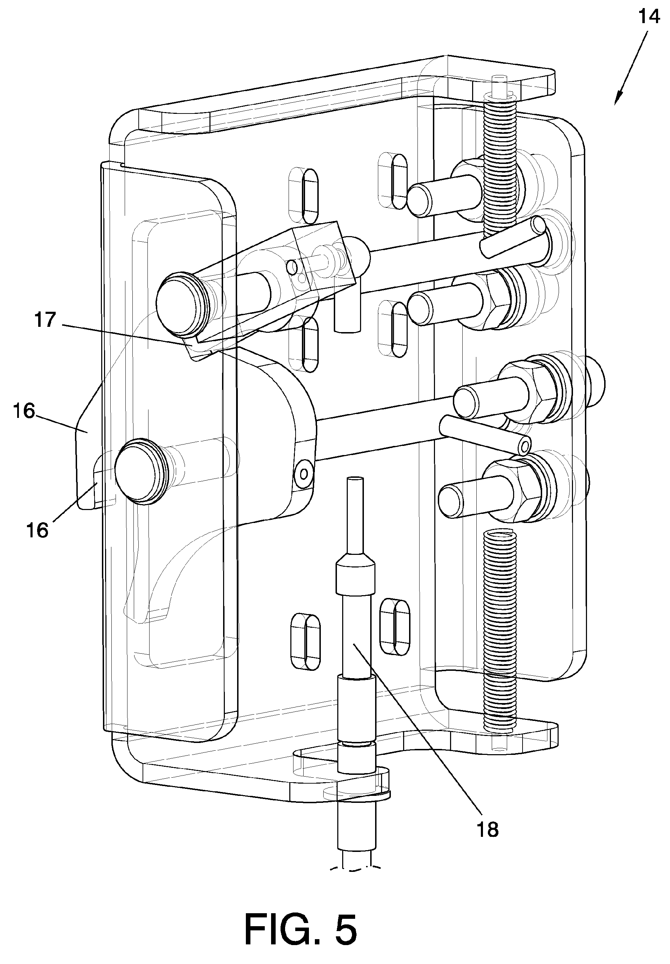

Figure 5 shows a schematic perspective view of the locking means of the leaf of the door comprised in the system of the invention, in a locked position.

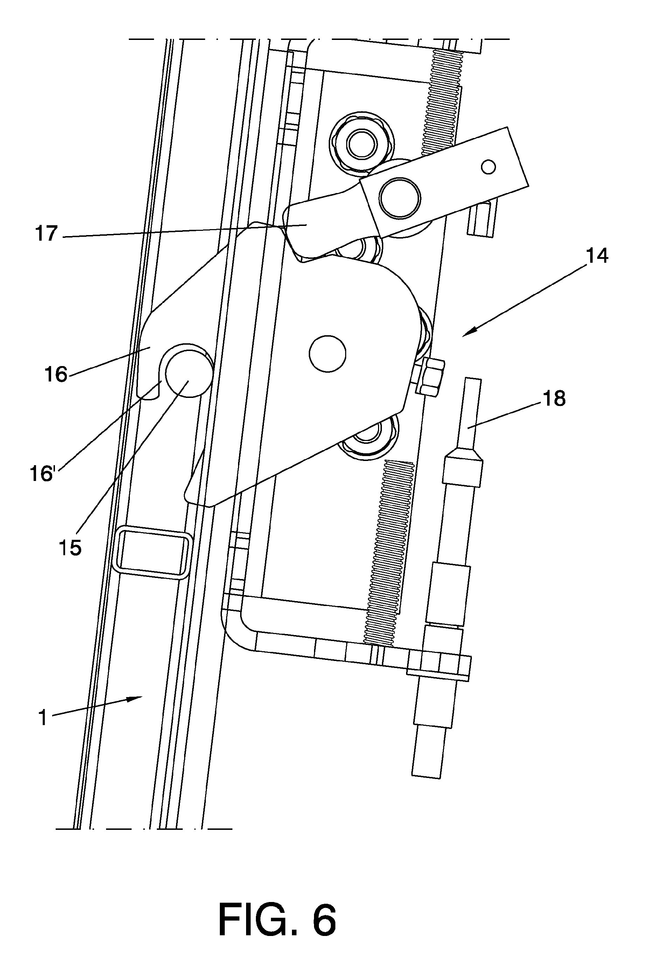

Figure 6 shows a section of an elevational view of the locking means shown in the previous figure, also in a locked position.

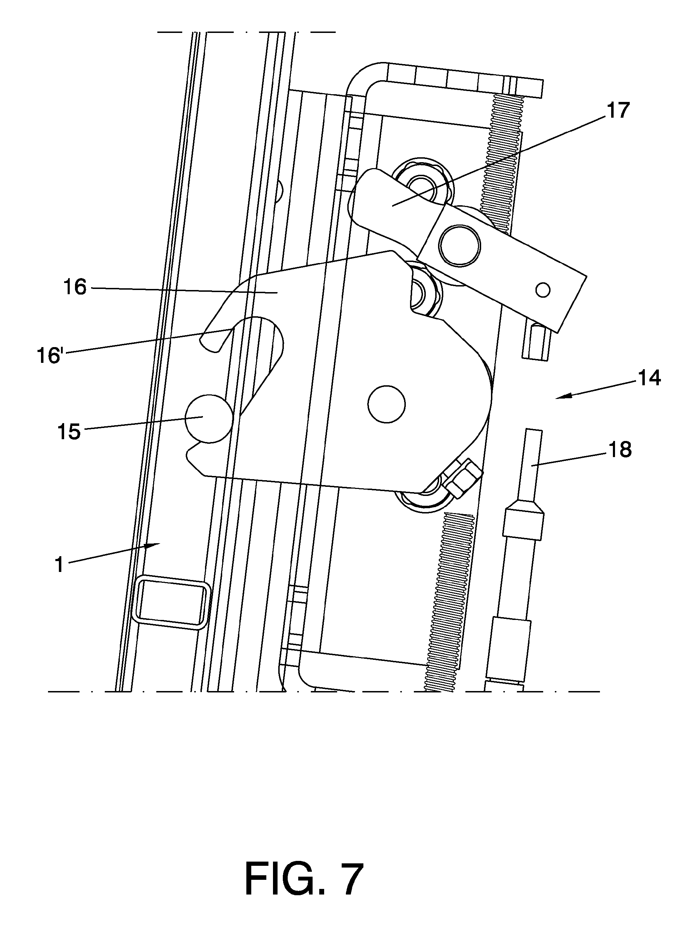

Figure 7 shows a section like that of the previous figure, in which said locking means are in an unlocked position.
Figure 8 shows a plan view of a leaf of the door in an intermediate open position, in which a dislocatable link and its contribution to maintaining the parallelism of said leaf can be seen.
Figure 9 shows a perspective view of a variant of the locking means, which comprise an automatic locking mechanism configured to keep said locking means permanently activated.
Figure 10 shows a perspective view of the epicyclic gear train, in which the arrangement of the ratchet mechanism can be seen.

### Preferred Embodiment of the Invention

In view of the described figures, it can be observed how in one of the possible embodiments of the invention, it relates to a system for the translation and locking operation of sliding doors comprising two doors (1) configured to perform a sliding movement operated by operating means (3), comprising a drive pulley (12), and actuated by means of a power source (2) consisting of an electric motor and which is operatively connected to an input shaft (5) of an epicyclic gear train (4).

The epicyclic gear train (4) comprises a planet carrier (10) and is configured to sequentially activate locking means (14) of the door (1) when it is in a closed position, being in a locked position in which the drive pulley (12) does not act.

The epicyclic gear train (4) is also configured to prevent an activation of said locking means (14) when the door (1) is not in the closed position.

The power source (2), which can consist of an electric motor, acts as a control for opening and closing the operating means (3) for the doors (1), such that when it has finished acting on said operating means (3) it acts as an operating control for the locking means (14). By mechanically assuring this sequential synchronization in the movements, actuation of the locking means (14) is prevented in the event that the leaves of the doors (1) are not in the closed position.

The input shaft (5) of the epicyclic gear train (4) is operatively in solidarity with a sun gear (7) which meshes with three input planetary gears (8), which are operatively connected with three output planetary gears (9), according to a gear reduction ratio.

The output planetary gears (9) in turn mesh with an output shaft (6) configured to transmit its rotating movement to the operating means (3) and the drive pulley (12), whereas the input planetary gears (8) are operatively in solidarity with the output planetary gears (9) by means of the planet carrier (10) by means of common shafts which allow the rotation of said planetary gears (8, 9).

On the other hand, the planet carrier (10) comprises an arm (11) which is configured to act on transmission means (18) when the input shaft (5) is moving and the output shaft (6) is locked, said transmission means (18) being configured to activate the locking means (14) of the door (1).

According to a preferred embodiment in which the doors (1) are the doors of a rail vehicle, while said leaves of the door (1) are moving with respect to the body of the vehicle, the arm (11) of the epicyclic gear train (4) is locked and the movement of the power source (2) is transmitted directly to the drive pulley (12), which is configured to move the leaves of the door (1). This transmission is performed through the movement of the central sun gears.

Next, when the door (1) stops upon reaching its closed position, which causes the stopping of both the drive pulley (12) and a guide pulley (13) collaborating with it, the power source (2) continues to act, whereby since the output shaft (6) is locked, the epicyclic gear train acts by transmitting the movement from the power source (2) to the planet carrier (10) and to its arm (11) which starts to move, causing the operation of the transmission means (18), which in turn transmit said operation to the locking means (14). The locking of the door (1) is thus coordinated with its translation movements, the locking means (14) being activated once the door (1) is closed.

To unlock the doors (1), prior to the beginning of the movement for opening the doors, with the locking means (14) activated, in addition to normally being secured by means of a motor brake and the actual operation of the epicyclic gear train (4), the power source (2) begins its movement to cause the doors to open, but since the leaves of the door (1) are locked, the power source (2) causes the rotation of the arm (11) of the epicyclic gear train (4), which begins to rotate in the direction opposite to that of activation of the locking, whereby deactivating said locking, thus releasing the locking means (4).

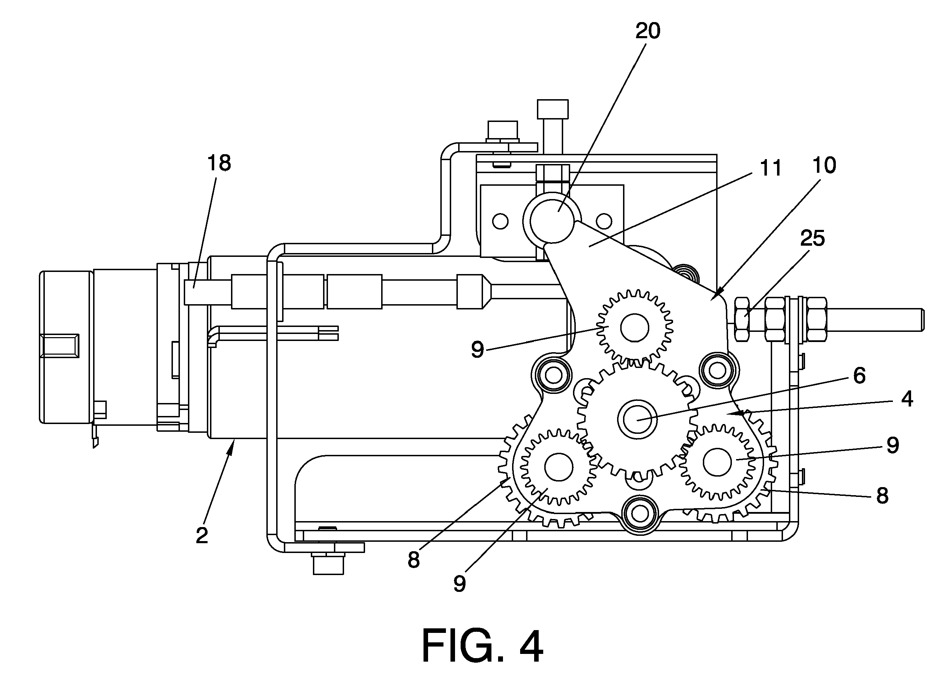

As can be seen in Figure 4, the movement is limited by means of an external stop (25) outside the arm (11) of the epicyclic gear train (4) so that it travels only what is necessary to allow the deactivation of the locking means (14). When the arm (11) reaches said external stop (25) all the movement of the power source (2) is transmitted to the drive pulley (12), which causes the translation movement for opening the leaves of the door (1).

The locking means (14) are located in a side area of the door (1), and comprise a retaining bolt (15) in solidarity with the door (1), said retaining bolt (15) being configured to be housed in a cam groove (16') having a retaining part (16) which is in solidarity with respect to the opening of the door (1), which is locked in a locked position after closing.

The locking means (14) comprise a locking lug (17) configured to be actuated by means of the transmission means (18) and lock the retaining part (16) in the locked position, in which the retaining part (16) houses said retaining bolt (15).

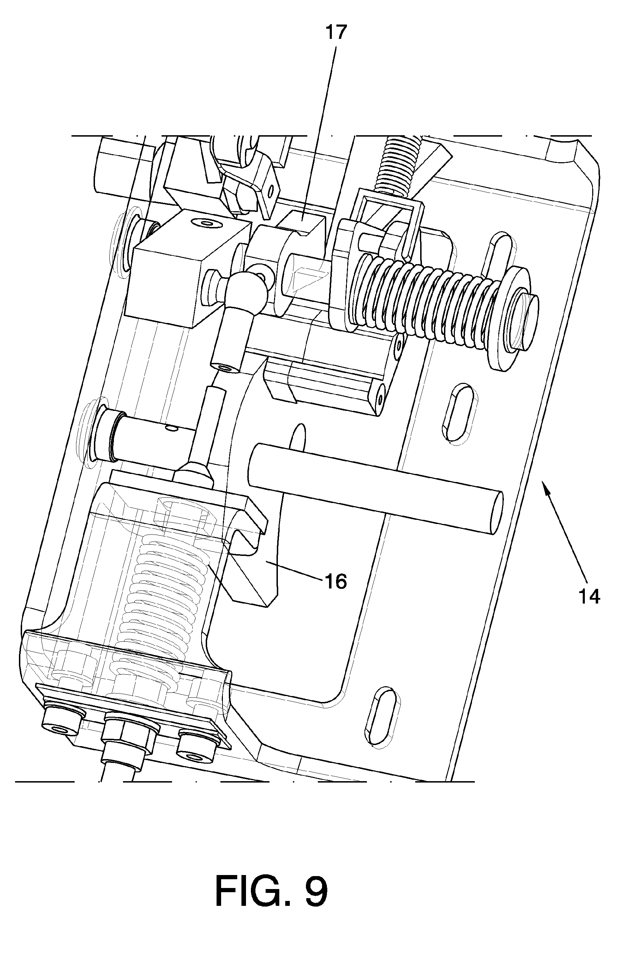

According to one embodiment variant, depicted in Figure 9, the locking means (14) comprise an automatic locking mechanism of the automatic locking/closing mechanism type acting on the latch of the closing mechanism of a conventional door.

Said automatic locking mechanism comprises springs which are configured to permanently act on the locking lug (17), such that it permanently acts on the retaining part (16), i.e., said locking lug (17), and therefore the locking means (14) are permanently loaded to lock the door (1).

With respect to the transmission means (18), they consist of push-pull operating cables.

According to a preferred embodiment, the power source (2) and the epicyclic gear train (4) are supported by means of an adjustable support frame (19) which is located on the opening of the door (1), said support frame (19) being able to consist of an upper support structure, comprising a standard central part and two customized side sections according to the width and size of the door, thus being adjustable and requiring less stock, allowing greater versatility and easier assembly of the system, especially for its implementation in different rail vehicles.

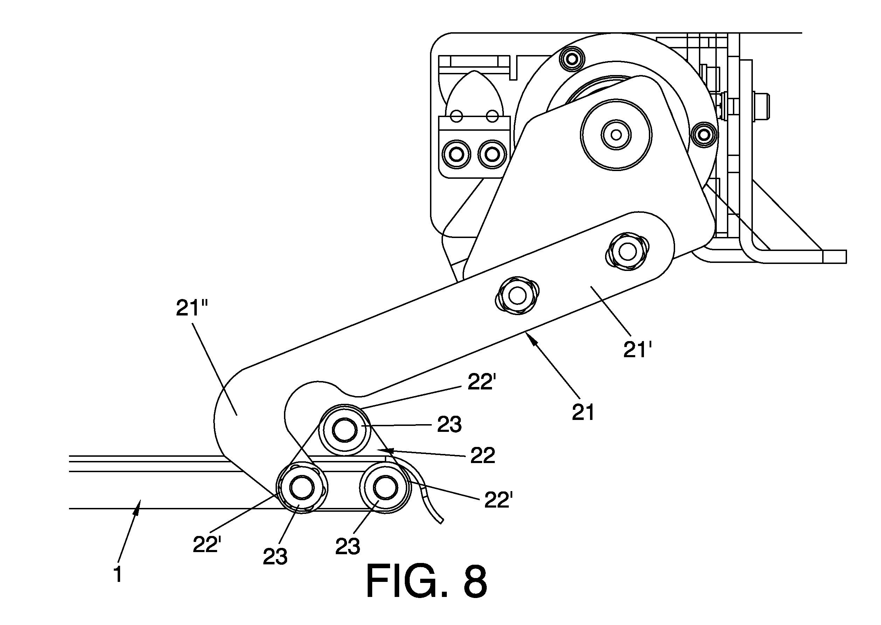

Each door (1) is linked to a vertical rotation axis in solidarity with the opening by means of at least one dislocatable link (21) which, at a first end (21'), is fixed to said vertical rotation axis and at a second end (21 ") is articulated to a vertex (22') of a triangular part (22) by means of a roller guide (23), said triangular part (22) comprising a roller guide (23) in each vertex (22'), and two roller guides (23) being housed, with displacement possibility, in a guide located in an inner face of the said at least one door (1), according to its translation direction, as can be seen in Figure 8.

The system for the translation and locking operation of sliding doors proposed by the invention comprises a pin (20) configured to allow a movement of the arm (11) of the planet carrier (10) when said at least one door (1) is in a closed position.

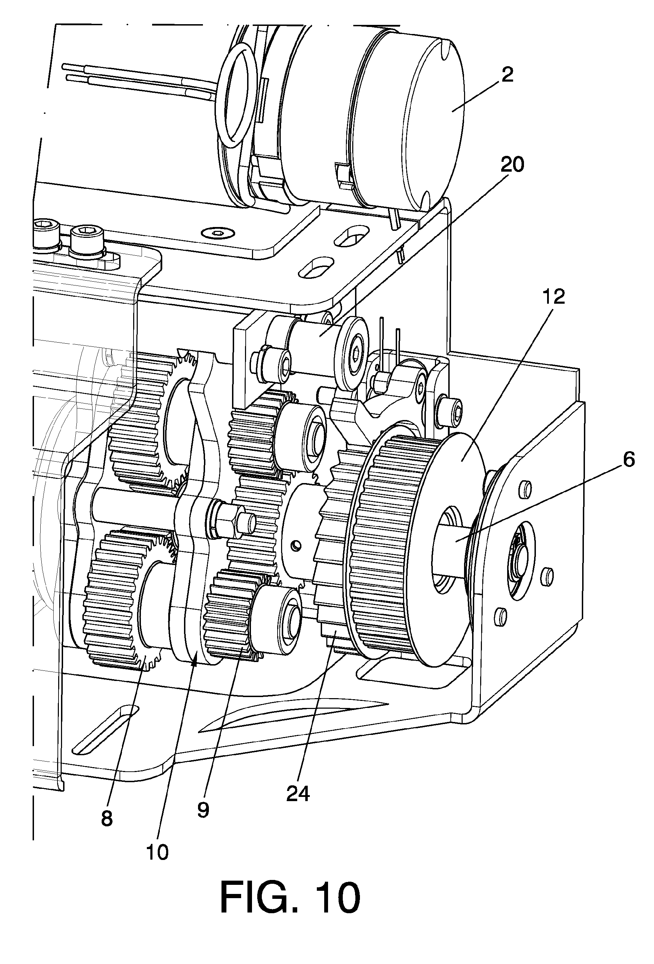

As depicted in Figures 4 and 10, the operation or movement of the epicyclic gear train (4) is limited by said pin (20), which can incorporate a groove configured to coincide with the arm (11) and allow its operating movement when said pin (20) is displaced as a result of the door closing, thus being a dual safety means, though it is not an indispensable element, given that the arm does not move until it is operated when the door (1) is in the closed position and the drive pulley (12) reaches its end of travel position, such that the output shaft (6) is locked, the arm of the epicyclic gear train (4) acting at said time.

The system of the invention also comprises a ratchet mechanism (24), in solidarity with the output shaft (6) and located parallel to the drive pulley (12), said ratchet mechanism (24) being configured to prevent the rotation of the output shaft (6) until it is mechanically actuated by the arm (11) of the planet carrier (10) when said arm (11) has deactivated the locking means (14), as depicted in Figure 10.

When the power source receives the order to open the doors, it sends the power to the epicyclic gear train and to the pulley. Since the pulley is locked by the catch, the epicyclic gear train can only operate the release of the locking. Once the aforementioned is performed, the ratchet mechanism (24) is released by means of a pin, the epicyclic gear train is locked for the previously mentioned operation and the door is pushed out and translated.

According to a preferred embodiment, the system for the translation and locking operation of sliding doors is in a rail vehicle and comprises a closed door sensor (1) and a locked door sensor (1) configured to prevent said vehicle from starting up in the event that said sensors detect that the door is not closed or locked.

The epicyclic gear train (4) also comprises a protection configured to prevent said epicyclic gear train (4) from becoming dirty, consisting of a high-strength plastic bag comprising quick closing means and containing substances protecting against dirt.

In view of this description and set of drawings, the person skilled in the art can understand that the embodiments of the invention which have been described can be combined in multiple ways within the object of the invention. The invention has been described according to several preferred embodiments thereof, but for the person skilled in the art it will be evident that multiple variations can be introduced in said preferred embodiments without exceeding the object of the claimed invention.

## Claims

1. System for the translation and locking operation of sliding doors comprising at least one door (1) configured to perform a sliding movement operated by operating means (3), comprising at least one drive pulley (12), actuated by means of at least one power source (2), **characterized in that** said at least one power source (2) is operatively connected to an input shaft (5) of an epicyclic gear train (4) comprising a planet carrier (10) configured to activate locking means (14) of said at least one door (1) when it is in a closed position, said epicyclic gear train (4) being configured to prevent an activation of said locking means (14) when said at least one door (1) is not in the closed position.

2. System for the translation and locking operation of sliding doors according to claim 1, **characterized in that** the input shaft (5) of the epicyclic gear train (4) is operatively in solidarity with sun gear (7) which meshes with at least one input planetary gear (8) which is operatively connected with at least one output planetary gear (9), according to a gear reduction ratio, said at least one output planetary gear (9) meshing with an output shaft (6) configured to transmit its rotating movement to the operating means (3) and the drive pulley (12), wherein said at least one input planetary gear (8) is operatively in solidarity with said at least one output planetary gear (9) by means of the planet carrier (10).

3. System for the translation and locking operation of sliding doors according to claim 2, **characterized in that** the planet carrier (10) comprises an arm (11) which is configured to act on transmission means (18) when the input shaft (5) is moving and the output shaft (6) is locked, said transmission means (18) being configured to activate the locking means (14) of said at least one door (1).

4. System for the translation and locking operation of sliding doors according to claim 3, **characterized in that** the locking means (14) are located in a side area of said at least one door (1), and comprise at least one retaining bolt (15) in solidarity with said at least one door (1), said at least one retaining bolt (15) being configured to be housed in a cam groove (16') having a retaining part (16) which is in solidarity with respect to an opening of said at least one door (1) being locked in a locked position after closing, said locking means (14) comprising at least one locking lug (17) configured to be actuated by means of the transmission means (18) and to lock the retaining part (16) in said locked position, in which the retaining part (16) houses said retaining bolt (15).

5. System for the translation and locking operation of sliding doors according to claim 4, **characterized in that** the locking means (14) comprise at least one automatic locking mechanism that comprises elastic means configured to permanently act on the locking lug (17), such that it permanently acts on the retaining part (16).

6. System for the translation and locking operation of sliding doors according to any of claims 3 to 5, **characterized in that** the transmission means (18) comprise push-pull operating cables and/or rods.

7. System for the translation and locking operation of sliding doors according to any of claims 3 to 6, **characterized in that** the transmission means (18) comprise at least one pneumatic electrovalve.

8. System for the translation and locking operation of sliding doors according to any of claims 3 to 7, **characterized in that** the transmission means (18) comprise at least one hydraulic pump.

9. System for the translation and locking operation of sliding doors according to any of claims 3 to 8, **characterized in that** the transmission means (18) comprise at least one electromagnet.

10. System for the translation and locking operation of sliding doors according to any of the previous claims, **characterized in that** said at least one power source (2) and the epicyclic gear train (4) are supported by means of a support frame (19) located on an opening of said at least one door (1).

11. System for the translation and locking operation of sliding doors according to any of the previous claims, **characterized in that** said at least one door (1) is linked to a vertical rotation axis with the opening of said at least one door (1), by means of at least one dislocatable link (21) which, at a first end (21'), is fixed to said vertical rotation axis and at a second end (21 ") is articulated to a vertex (22') of a triangular part (22) by means of a roller guide (23), said triangular part (22) comprising a roller guide (23) in each vertex (22'), and two roller guides (23) being housed, with displacement possibility, in a guide located in an inner face of said at least one the door (1 ), according to its translation direction.

12. System for the translation and locking operation of sliding doors according to any of the previous claims, **characterized in that** it comprises at least one pin (20) configured to allow a movement of the arm (11) of the planet carrier (10) when said at least one door (1) is in a closed position.

13. System for the translation and locking operation of sliding doors according to any of the previous claims, **characterized in that** it comprises a ratchet mechanism (24) in solidarity with the output shaft (6) and located in parallel to the drive pulley (12), said ratchet mechanism (24) being configured to prevent the rotation of the output shaft (6) until it is mechanically actuated by the arm (11) of the planet carrier (10) when said arm (11) has deactivated the locking means (14).

14. System for the translation and locking operation of sliding doors according to any of the previous claims, **characterized in that** it is in a vehicle and comprises at least one closed door sensor (1) and at least one locked door sensor (1) configured to prevent said vehicle from starting up in the event that said sensors detect that the door is not closed or locked.

15. System for the translation and locking operation of sliding doors according to any of the previous claims, **characterized in that** the epicyclic gear train (4) comprises a protection configured to prevent said epicyclic gear train (4) from becoming dirty.

16. System for the translation and locking operation of sliding doors according to claim 13, **characterized in that** the protection consists of a high-strength plastic bag comprising quick closing means and contains substances protecting against dirt.

17. System for the translation and locking operation of sliding doors according to any of the previous claims, **characterized in that** epicyclic gear train (4) comprises friction bearings.

18. System for the translation and locking operation of sliding doors according to any of the previous claims, **characterized in that** epicyclic gear train (4) comprises bearings.
